# EUROPEAN PATENT APPLICATION

(11) **EP 2 796 314 A1**
(43) Date of publication of application: **29.10.2014**
(21) Application number: 12858825.8
(22) Date of filing: 21.12.2012
(51) Int. Cl.: B60L 11/18

(54) **SHIFT SHOCK REDUCTION SYSTEM OF ELECTRICALLY DRIVEN UTILITY VEHICLE**

(30) Priority: 23.12.2011 KR 20110141090
(71) Applicant: Daedong Industrial co. Ltd., Dalsung-Gun, Daegu 635-806 (KR)
(72) Inventor: IM, Sung Do, Changnyeong-gun Gyeongsangnam-do 635-806 (KR)
(74) Representative: Caspary, Karsten
(86) International application number: PCT/KR2012/011279
(87) International publication number: WO 2013/095049

(57) **Abstract**

Disclosed is a shift shock reduction system of an electrically driven utility vehicle. The shift shock reduction system according to the present invention comprises: a motor controller which controls an output of a motor; an automatic transmission which has a pair of electrically-powered means with two speeds or more; and a transmission control unit which is electrically connected with the controller, and controls the automatic transmission, wherein when the automatic transmission changes speed by the transmission control unit, a temporary neutral state is implemented, and as soon as the automatic transmission reaches a neutral position, control for increasing or reducing RPM of the motor can be carried out by the motor controller.

## Description

### [Technical Field]

The present invention relates to a shift shock reduction system and, more particularly, to a shift shock reduction system for an electrically driven utility vehicle, which can reduce a shift shock attributable to a speed difference generated due to a difference of a gear ratio when the gear of an electric vehicle driven by a motor shifts while driving.

### [Background Art]

Recently, a utility vehicle (UTV) is widely used in wide fields, such as distribution, construction, leisure, and agricultural use. In particular, a utility vehicle has a structure advantageous for steep path driving, and thus the utility vehicle is chiefly used as delivery means for carrying soil or the crops in construction sites or agricultural site or for carrying tools necessary for various tasks.

An electrically-driven type utility vehicle which can implement an eco-friendly vehicle because it never generates exhaust gas and has very low noise, unlike in the prior art in which a mechanical engine is mounted, is recently searched and developed. The electrically-driven type basically includes a motor for generating driving power, a battery that is an energy source, various control parts for controlling the motor and the battery, and other peripheral parts.

The electrically-driven type is disadvantageous in that it is difficult to implement stable low-speed driving in environments that requires low RPM and high torque, such as unpaved road driving or slope hill-climbing, because driving speed is changed by control of the output of the motor that is varied in proportion to the manipulation displacement of an acceleration pedal and the motor generates constant output irrespective of RPM. In order to solve this problem, to apply a shift technique to the electrically-driven type vehicle as in a conventional mechanical engine vehicle is being reviewed.

In general, a transmission having a decrease ratio of 2 steps or more is widely adopted as a transmission for the electrically-driven type vehicle. In particular, a shift ratio between gear steps tends to be great for purposes of a hill-climbing ability, acceleration performance, and excellent performance in smooth driving. If a difference between the shift ratios of the gear steps is made great, however, a shift shock is increased, such as that a vehicle is severely rattled due to a speed difference attributable to a difference between the shift ratios of gear steps when a gear shifts.

The problem due to a shift shock can be solved to some extent by a method of adopting a synchronization device, such as a synchro-mesh type tool. The synchronization device is advantageous for a reduction of a shift shock and also advantageous in that it can reduce shift noise and also easily implement a gear shift. In order to apply the synchronization device, however, there is a disadvantage in that the device becomes very complicated and there is a disadvantage in price competitiveness in a mass-produced vehicle due to a an increased production cost.

### [Disclosure]

### [Technical Problem]

An object of the present invention is to provide a shift shock reduction system for an electrically driven utility vehicle, which can implement a shift shock reduction using a simple and easy method even without adopting a synchronization device by temporarily increasing or decreasing speed of driving means (motor) by a shift ratio difference when a down gear shift is performed while driving.

### [Technical Solution]

As a technical solution for achieving the object, the present invention provides a shift shock reduction system for an electrically driven utility vehicle includes a motor controller controlling output of a motor; an automatic transmission having a pair of power transmitting means of two steps or more; and a shift controller connected to the motor controller so that the shift controller sends and receives control information to and from the motor controller and controlling a gear shift of the automatic transmission, wherein the automatic transmission is implemented to be placed in a temporary neutral state when a gear shifts under the control of the shift controller, and the motor controller performs control for increasing or decreasing rotation speed of the motor when the automatic transmission reaches the neutral state.

In the present embodiment, the motor controller may perform control for increasing or decreasing the rotation speed of the motor by rotation speed that corresponds to a difference between a shift ratio of the power transmitting means before and after the gear shift.

Preferably, assuming that a gear ratio before the gear shift is X, RPM of the motor before the gear shift is A, a gear ratio to be reached after the gear shift is Y, and RPM of the motor to be reached after the gear shift is B, control for increasing or decreasing rotation speed of the motor may be performed so that the RPM B after the gear shift approaches 'the RPM A before the gear shift * the gear ratio X before the gear shift / the gear ratio Y after the gear shift.

In the present embodiment, the automatic transmission may be a hydraulic automatic transmission driven by oil pressure, and the shift controller may be a directional control valve that controls a flow of hydraulic-driven oil introduced into the hydraulic automatic transmission and controls a direction of the hydraulic-driven oil.

Here, the automatic transmission may include a main shaft directly connected to an output shaft of the motor; a follower shaft parallel to the main shaft; two pairs or more of the power transmitting means installed in the main shaft and the follower shaft, respectively, in pairs; and two or more multi-plate disc clutches installed in the follower shaft, driven by hydraulic-driven oil, and configured to control the transmission of shift power of the power transmitting means to the follower shaft.

Furthermore, the power transmitting means may be gears or may be belts engaged with each other in pairs and belt pulleys rotated in pairs.

### [Advantageous Effects]

In accordance with the shift shock reduction system for an electrically-driven type utility vehicle according to the present invention, an instant shift shock generated during a gear shift process can be effectively absorbed and mitigated even without adopting a synchronization device by simple control for increasing or decreasing speed of the motor by rotation speed that corresponds to a difference between a shift ratio of the power transmitting means before and after a gear shift when an automatic shift from a high step to a low step or from a low step to a high step is performed.

Furthermore, structure can be simplified and the weight of structure can be reduced because a synchronization device having a complicated construction is not required as in the prior art. Accordingly, a vehicle having improved performance and power efficiency can be implemented because necessary power is small. Furthermore, there is an advantage in terms of price competitiveness in the final mass production vehicle because overall production costs can be reduced by obviating an expensive synchronization device.

### [Description of Drawings]

FIG. 1 is a block diagram schematically showing the general construction of a shift shock reduction system in accordance with an embodiment of the present invention.
FIG. 2 is a detailed system construction diagram showing the shift shock reduction system shown in FIG. 1.
FIG. 3 is a table showing a difference in the rotation speed of a motor according to a difference of a shift ratio when a gear shifts.
FIGS. 4 to 6 are diagrams showing an operation for reducing a shift shock which is implemented by the shift shock reduction system of the present invention and are diagrams showing a process in which a down gear shift is performed from a high step to a low step when overload is applied during high-speed driving.

### [Mode for Invention]

A preferred embodiment of the present invention is described in detail below with reference to the accompanying drawings. In describing the present invention, a detailed description of known constructions is omitted, and a detailed description of constructions that will make the gist of the present invention unnecessarily vague is also omitted.

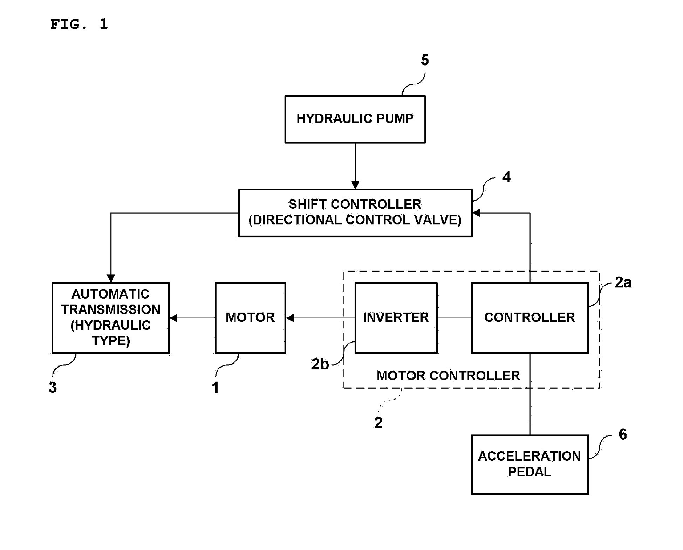

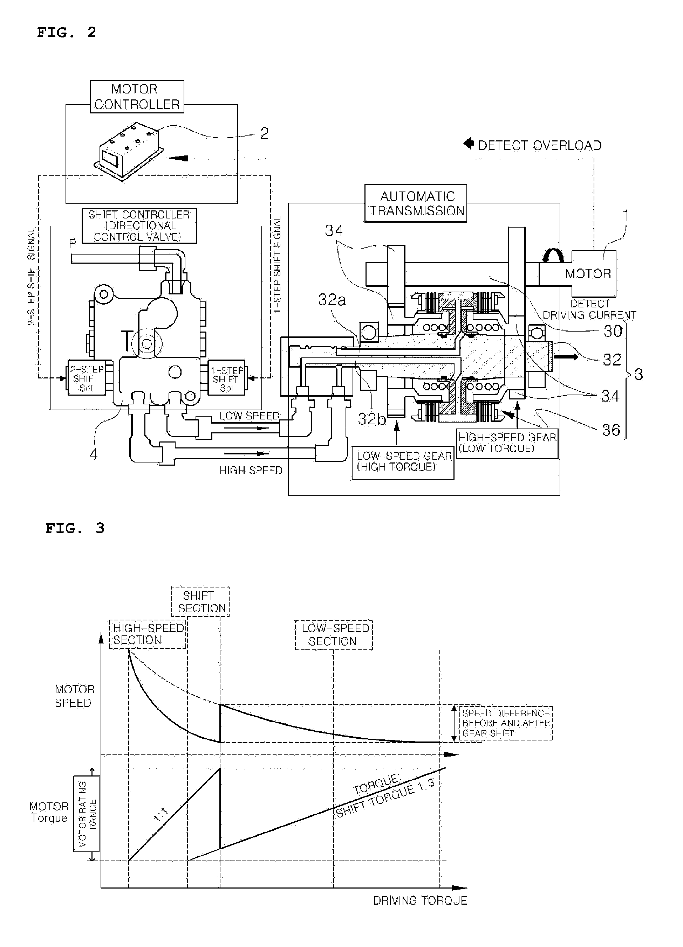

FIG. 1 is a block diagram schematically showing the general construction of a shift shock reduction system in accordance with an embodiment of the present invention, and FIG. 2 is a detailed system construction diagram showing the shift shock reduction system shown in FIG. 1.

Referring to FIGS. 1 and 2, the shift shock reduction system according to the present invention includes a motor 1, an automatic transmission 3, a motor controller 2, and a shift controller 4. The motor 1 outputs power for driving a vehicle using electric energy provided by a battery (not shown) as a power source. The automatic transmission 3 includes a pair of power transmitting means of two steps or more 34 for changing power output from the motor 1 at speed suitable for driving step by step or continuously.

The output of the motor 1 that generates driving power is controlled under the control of the motor controller 2 that is associated with a manipulation displacement of an acceleration pedal 6. Furthermore, when a gear shifts through the automatic transmission 3 while driving, the motor controller 2 receives information related to the number of gear steps and executes control for increasing or decreasing speed of the motor 1 during the gear shift. The information related to the number of gear steps can be detected by a common position sensor (not shown) for detecting the number of gear steps through the position of the power transmitting means 34.

The automatic transmission 3 is placed in a temporary neutral state when a gear shifts under the control of the shift controller 4. When the automatic transmission 3 placed in the temporary neutral state during the gear shift, control for increasing or decreasing speed of the motor 1 is executed by the motor controller 2 that has received the gear shift information. For example, in the case of a 2-step gear, for a gear shift from a second step (high speed) to a first step (low speed), a power connection to the second step side is disconnected, and control for increasing rotation speed of the motor 1 is performed right before power is connected to the first step side.

Rotation speed of the motor 1 that is increased or decreased based on information about the number of gear steps during a gear shift may be rotation speed (RPM) that compensates for a difference between a shift ratio of the power transmitting means 34 before and after a gear shift. More particularly, as can be seen from a table showing a difference in the rotation speed of the motor 1 according to a difference between shift ratios of FIG. 3, it is better to increase or decrease speed of the motor 1 by rotation speed that corresponds to a difference in the speed of the motor 1 before and after a gear shift has been shifted.

Assuming that a gear ratio before a gear shift is X, RPM of the motor before a gear shift is A, a gear ratio to be reached after a gear shift is Y, and RPM of the motor 1 to be reached after a gear shift is B, the increase or decrease of rotation speed of the motor 1 for compensating for a difference in the speed of the motor 1 before and after the gear shift may include increasing or decreasing speed of the motor 1 so that the RPM B after the gear shift approaches 'the RPM A before the gear shift * the gear ratio X before the gear shift / the gear ratio Y after the gear shift.

The motor controller 2 for performing increase or decrease speed control when a gear shifts may include a controller 20 and an inverter 22 for controlling electric power supplied from the battery to the motor 1 under the control of the controller 20. The automatic transmission 3 may be the hydraulic automatic transmission 3 driven by oil pressure. Furthermore, in the case of the hydraulic automatic transmission 3, the shift controller 4 may be a directional control valve for permitting or blocking power connection by the automatic transmission 3 by controlling the flow of hydraulic-driven oil and controlling the hydraulic-driven oil.

The hydraulic automatic transmission 3 applied to the present embodiment, as shown in FIG. 2, may include a main shaft 30 directly connected to the output shaft of the motor 1, a follower shaft 32 parallel to the main shaft 30, two pairs or more of the power transmitting means 34 installed in the main shaft 30 and the follower shaft 32, respectively, in pairs, and two or more multi-plate disc clutches 36 installed in the follower shaft 32, driven by hydraulic-driven oil, and configured to control the transmission of shift power of the power transmitting means 34 to the follower shaft.

Internal paths 32a and 32b along which hydraulic-driven oil provided by the shift controller 4 can be transferred to the multi-plate disc clutch 36 may be formed in the follower shaft 32. The multi-plate disc clutch 36 may include known elements, including a retainer, a plurality of clutch plates formed in the retainer at specific intervals, a clutch disc connected to the clutch plates by hydraulic-driven oil, and an elastic member for isolating the clutch disc from the clutch plates.

Meanwhile, the power transmitting means 34 applied to the present embodiment preferably is gearshifts that are engaged with each other to form a pair as shown. However, the present invention is not limited to the illustrated example, but a construction in which the driving side and the follower side are coupled to form a pair every step so that they are electrically driven and a selective power connection can be implemented by a clutch (e.g., belt pulleys that are rotated in pairs as belts) is not specially limited and applied.

In FIG. 1, reference numeral 5 is a hydraulic pump for generating hydraulic-driven oil to be supplied to the shift controller 4, particularly, the directional control valve, and 6 is the acceleration pedal for controlling output speed of the motor.

A process of reducing a shift shock while driving, which is performed by the shift shock reduction system for an electrically driven utility vehicle, is described in brief in association with an operation according to the present invention.

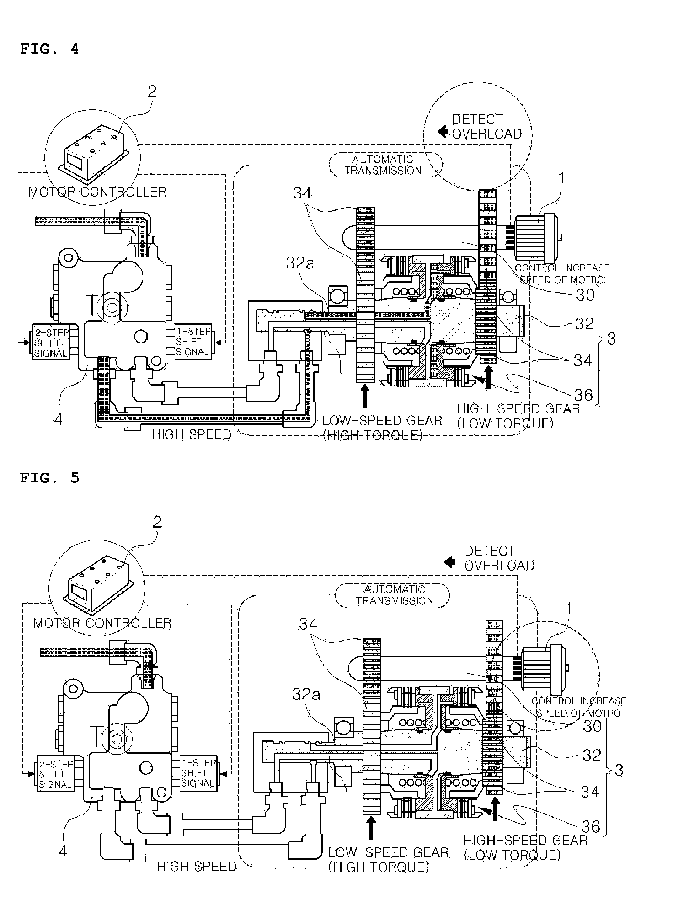

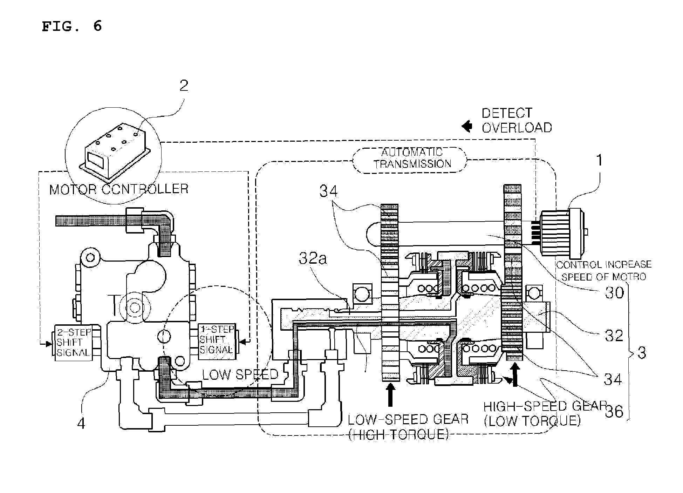

FIGS. 4 to 6 are diagrams showing an operation for reducing a shift shock, which is implemented by the shift shock reduction system of the present invention and are diagrams showing a process in which a down gear shift is performed from a high step to a low step when overload is applied during high-speed driving.

As shown, the operation of the reduction system according to the present invention is described by taking a down gear shift from a high step to a low step while driving with a 2-step gearshift as an example.

If a vehicle is driven at high speed, as shown in FIG. 4, hydraulic-driven oil flows under the control of the shift controller 4 in the direction that connects the multi-plate clutch on the high-step side. Accordingly, rotation power by the main shaft 30 is output through the follower shaft 32 after a gear shift at a corresponding shift ratio via the high-step side gearshift.

When a load is detected in the motor 1 due to the entry of a slope during such high-speed driving, the motor controller 2 starts control for a down gear shift based on the load information.

When a load is detected in the motor 1, the motor controller 2 transmits a signal for the down gear shift to the shift controller 4 based on the load information. In response to the corresponding command, the shift controller 4 blocks the flow of hydraulic-driven oil toward the high-step side, and thus the connection of the multi-plate disc clutch with the high-step side is released by the restoration force of the elastic member (compression spring).

When the connection of the multi-plate disc clutch with the high-step side is released, the automatic transmission 3 is instantly placed in the neutral state, such as that shown in FIG. 5. At the moment when the automatic transmission 3 reaches the neutral position as described above, the motor controller 2 performs controls for increasing speed of the motor 1 at speed that can compensate for a difference in the speed of the motor 1 before and after a gear shift.

For reference, if a gear shifts from a low step to a high step, control for decreasing speed of the motor 1 is performed.

After acceleration for compensating a difference in the speed of the motor 1 due to a difference of a shift ratio is completed, hydraulic-driven oil flows in the direction that connects the multi-plate disc clutch to the low-step side toward which a gear will shift through the operation of the shift controller 4 by the motor controller 2. Accordingly, the multi-plate disc clutch is connected to the low-step side. In such a process, a shift shock is absorbed and mitigated at the moment when the low-step side clutch is connected by the compensation of a shift ratio due to the acceleration of the motor 1.

Meanwhile, when the connection of the multi-plate disc clutch with the low-step side is completed, rotation power of the main shaft 30 transferred through the motor 1 is output externally through the follower shaft 32 with a shift ratio via the low-step side gearshift.

In accordance with the shift shock reduction system for an electrically-driven type utility vehicle according to the present invention, an instant shift shock generated during a gear shift process can be effectively absorbed and mitigated even without adopting a synchronization device by simple control for increasing or decreasing speed of the motor by RPM that corresponds to a difference between a shift ratio of the power transmitting means before a gear shift and a shift ratio of the power transmitting means after a gear shift when an automatic shift from a high step to a low step or from a low step to a high step is performed.

Furthermore, structure can be simplified and the weight of structure can be reduced because a synchronization device having a complicated construction is not required as in the prior art. Accordingly, a vehicle having improved performance and power efficiency can be implemented because necessary power is small. Furthermore, there is an advantage in terms of price competitiveness in the final mass production vehicle because overall production costs can be reduced by obviating an expensive synchronization device.

Only a special embodiment has been described in the detailed description of the present invention. It is however to be understood that the present invention is not limited to a special form described in the detailed description, but the present invention should be construed as including all modifications, equivalents, and replacements which fall within the scope and range of the present invention defined by the attached claims.

### [Description of reference numerals]

- 1:: motor
- 2:: motor controller
- 2a:: controller
- 2b:: inverter
- 3:: automatic transmission
- 4:: shift controller
- 30:: main shaft
- 32:: follower shaft
- 34:: power transmitting means
- 36:: multi-plate disc clutch

## Claims

1. A shift shock reduction system for an electrically driven utility vehicle, comprising:
a motor controller controlling output of a motor;
an automatic transmission having a pair of power transmitting means of two steps or more; and
a shift controller connected to the motor controller so that the shift controller sends and receives control information to and from the motor controller and controlling a gear shift of the automatic transmission,
wherein the automatic transmission is implemented to be placed in a temporary neutral state when a gear shifts under a control of the shift controller, and the motor controller performs control for increasing or decreasing rotation speed of the motor when the automatic transmission reaches the neutral state.

2. The shift shock reduction system of claim 1, wherein the motor controller increases or decreases the rotation speed of the motor by rotation speed that corresponds to a difference between a shift ratio of the power transmitting means before and after the gear shift.

3. The shift shock reduction system of claim 2, wherein assuming that a gear ratio before the gear shift is X, RPM of the motor before the gear shift is A, a gear ratio to be reached after the gear shift is Y, and RPM of the motor to be reached after the gear shift is B, rotation speed of the motor is increased or decreased so that the RPM B after the gear shift becomes 'the RPM A before the gear shift * the gear ratio X before the gear shift / the gear ratio Y after the gear shift.

4. The shift shock reduction system of claim 1, wherein:
the automatic transmission is a hydraulic automatic transmission driven by oil pressure, and
the shift controller is a directional control valve that controls a flow of hydraulic-driven oil introduced into the hydraulic automatic transmission and controls a direction of the hydraulic-driven oil.

5. The shift shock reduction system of claim 4, wherein the automatic transmission comprises:
a main shaft directly connected to an output shaft of the motor;
a follower shaft parallel to the main shaft;
two pairs or more of the power transmitting means installed in the main shaft and the follower shaft, respectively, in pairs; and
two or more multi-plate disc clutches installed in the follower shaft, driven by hydraulic-driven oil, and configured to control the transmission of shift power of the power transmitting means to the follower shaft.

6. The shift shock reduction system of any one of claims 1 to 5, wherein the power transmitting means is gears or belts engaged with each other in pairs and belt pulleys rotated in pairs.
